(19) Europäisches Patentamt
European Patent Office
Office européen des brevets

(11) EP 1 136 982 A2

(12) EUROPÄISCHE PATENTANMELDUNG

(43) Veröffentlichungstag:
**26.09.2001 Patentblatt 2001/39**

(51) Int Cl.$^7$: **G10L 15/18**

(21) Anmeldenummer: **01000056.0**

(22) Anmeldetag: **14.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **24.03.2000 DE 10014337**

(71) Anmelder:
- **Philips Corporate Intellectual Property GmbH
52064 Aachen (DE)**
Benannte Vertragsstaaten:
**DE**
- **Koninklijke Philips Electronics N.V.
5621 BA Eindhoven (NL)**
Benannte Vertragsstaaten:
**FR GB**

(72) Erfinder: **Klakow, Dietrich
c/o Philips Corp. Int. Prop.GmbH
52064, Aachen (DE)**

(74) Vertreter: **Volmer, Georg, Dipl.-Ing. et al
Philips Corporate Intellectual Property GmbH,
Habsburgerallee 11
52064 Aachen (DE)**

(54) **Erzeugung eines Sprachmodells und eines akustischen Modells für ein Spracherkennungssystem**

(57) Die Erfindung betrifft ein Verfahren zur Erzeugung eines Sprachmodells und ein Verfahren zur Erzeugung eines akustischen Modells für ein Srxacherkennungssystem. Es wird worgeschlagen, das jeweilige Trainingsmaterial sukzessive um einzelne Trainingsmaterialanteile in Abhängigkeit von anwendungsspezifischen Daten zu reduzieren oder zu erweitern, um das jeweilige Trainingsmaterial zur Erzeugung des Sprachmodells und des akustischen Modells zu erhalten.

EP 1 136 982 A2

## Beschreibung

Verfahren zum Erzeugen eines Sprachmodells und eines akustischen Modells für ein Spracherkennungssystem

Die Erfindung betrifft ein Verfahren zur Erzeugung eines Sprachmodells für ein Spracherkennungssystem. Die Erfindung betrifft auch ein Verfahren zur Erzeugung eines akustischen Modells für ein Spracherkennungssystem.

Für die Erzeugung von Sprachmodellen und akustischen Modellen für Spracherkennungssysteme liegt umfangreiches Trainingsmaterial vor, das allerdings nicht notwendig anwendungsspezifisch ist. Das Trainingsmaterial für die Sprachmodellerzeugung beinhaltet üblicherweise eine Sammlung einer Vielzahl von Textdokumenten, z. B. Zeitungsartikeln. Das Trainingsmaterial für die Elzeugung eines akustischen Modells beinhaltet akustische Referenzen für Sprachsignalabschnitte.

Aus der WO 99/18556 ist es bekannt, aus einer verfügbaren Menge an Textdokumenten bestimmte Dokumente mit Hilfe eines Selektionskriterium zu selektieren und den durch die selektierten Dokumenten gebildeten Textkorpus der Sprachmodellbildung zugrunde zu legen. Es wird vorgeschlagen, die Dokumente im Internet zu suchen und die Selektion in Abhängigkeit von der Häufigkeit vorgegebener Schlüsselworte in den Dokumenten durchzuführen.

Der Erfindung liegt die Aufgabe zugrunde, die Sprachmodellerzeugung im Hinblick auf möglichst gute Ausnutzung von vorhandenem Trainingsmaterial zu optimieren.

Die Aufgabe wird dadurch gelöst, dass ein erster Textkorpus sukzessive um ein oder mehrere Textkorpusteile in Abhängigkeit von Textdaten eines anwendungsspezifischen zweiten Textkorpus reduziert wird und dass unter Verwendung des reduzierten ersten Textkorpus die Werte des Sprachmodells erzeugt werden.

Dieser Ansatz führt zu einem anwendungsspezifischen Sprachmodell mit reduzierter Perplexität und verringerter OOV-Rate, was schließlich die Wortfehlerrate des Spracherkennungssystems verbessert, wobei der Rechenaufwand möglichst klein gehalten wird Außerdem kann man so ein Sprachmodell kleinerer Größe erzeugen, bei dem gegenüber einem auf dem noch nicht reduzierten ersten Textkorpus basierenden Sprachmodell Sprachmodellbaumpfade eingespart werden können, so dass der Speicherplatzbedarf reduziert ist.

Vorteilhafte Ausgestaltungen sind in den Unteransprüchen 2 bis 6 angegeben.

Ein anderer Ansatz zur Sprachmodellerzeugung (Anspruch 7) beinhaltet, dass ein Textkorpusteil eines gegebenen ersten Textkorpusses in Abhängigkeit von Textdaten eines anwendungsspezifischen Textkorpusses sukzessive um ein oder mehrere andere Textkorpusteile des ersten Textkorpusses zur Bildung eines zweiten Textkorpusses erweitert wird und dass die Werte des Sprachmodells unter Verwendung des zweiten Textkorpusses erzeugt werden. Im Gegensatz zum vorher beschriebenen Verfahren wird ein großer (Hintergrund-) Textkorpus nicht reduziert, sondern es werden sukzessive Anteile dieses Textkorpusses aufakkumuliert. Dies führt auf ein Sprachmodell mit ähnlich guten Eigenschaften wie ein nach dem vorher genannten Verfahren erzeugtes Sprachmodell.

Der Erfindung liegt auch die Aufgabe zugrunde, die Erzeugung des akustischen Modells des Spracherkennungssystems im Hinblick auf möglichst gute Ausnutzung von vorhandenem akustischem Trainingsmaterial zu optimieren.

Diese Aufgabe wird dadurch gelöst, dass eine erste Anzahl von Sprachäußerungen repräsentierendes akustisches Trainingsmaterial sukzessive um einzelne Sprachäußerungen repräsentierende Trainingsmaterialanteile in Abhängigkeit von einer zweiten Anzahl anwendungsspezifischer Sprachäußerungen reduziert wird und dass mittels des reduzierten akustischen Trainingsmaterials die akustischen Referenzen des akustischen Modells gebildet werden.

Dieser Ansatz führt auf ein kleineres akustisches Modell mit einer reduzierten Anzahl an akustischen Referenzen. Außerdem enthält das so erzeugte akustische Modell weniger im Merkmalsraum verstreute vereinzelte akustische Referenzen. Das erfindungsgemäß erzeugte akustische Modell führt schließlich zu einer kleineren Wortfehlerrate des Spracherkennungssystems.

Entsprechende Vorteile gelten für den Ansatz, dass ein eine Sprachäußerung repräsentiertender Anteil eines gegebenen akustischen Trainingsmaterials, das eine Vielzahl von Sprachäußerungen repräsentiert, sukzessive um ein oder mehrere andere Anteile des gegebenen akustischen Trainingsmaterials erweitert wird und das mittels der aufakkumulierten Anteile des gegebenen akustischen Trainingsmaterials die akustischen Referenzen des akustischen Modells gebildet werden.

Ausführungsbeispiele der Erfindung werden nachfolgend anhand der Zeichnungen näher beschrieben. Es zeigen:

Fig. 1 ein Blockschaltbild eines Spracherkennungssystems und
Fig. 2 ein Blockschaltbild zur Erzeugung eines Sprachmodells für das Spracherkennungssystem.

Fig. 1 zeigt die Grundstruktur eines Spracherkennungssystems 1, insbesondere eines Diktiersystems (z B. FreeSpeech von Philips). Ein eingegebenes Sprachsignal 2 wird einer Funktionseinheit 3 zugeführt, die für dieses Signal eine Merkmalsextraktion (FE, "feature extraction") durchführt und dabei Merkmalsvektoren 4 erzeugt, die einer Verarbeitungseinheit 5 (MS, "matching unit") zugeführt werden. In der Verarbeitungseinheit 5, die das Erkennungsergebnis ermittelt und ausgibt, wird in der bekannten Weise eine Pfadsuche durchgerührt, wobei ein akustisches Modell 6 (AM) und ein Sprachmodell 7 (LM) eingesetzt wird. Das akustische Modell 6 umfasst einerseits Modelle für Wortuntereinheiten wie beispielsweise Triphone, denen Folgen von akustischen Referenzen zugeordnet sind (Block 8) und ein Lexikon 9, das das verwendete Vokabular repräsentiert und mögliche Folgen von Wortuntereinheiten vorgibt. Die akustischen Referenzen korrespondieren zu Zuständen von Hidden Markov Modellen. Das Sprachmodell 7 gibt N-Gramm-Wahrscheinlichkeiten an. Insbesondere wird ein Bigramm- oder ein Trigramm-Sprachmodell verwendet. Zur Erzeugung von Werten für die akustischen Referenzen und für die Erzeugung des Sprachmodells sind Trainingsphasen vorgesehen. Nähere Erläuterungen zum Aufbau des Spracherkennungssystems 1 lassen sich beispielsweise der WO 99/18556 entnehmen, deren Inhalt hiermit in diese Patentanmeldung einbezogen wird.

Mittlerweile existiert umfangreiches Trainingsmaterial sowohl für die Bildung eines Sprachmodells als auch für die Bildung eines akustischen Modells. Die Erfindung bezieht sich darauf, aus dem vorhandenen Trainingsmaterial die Anteile zu selektieren, die in Bezug auf die Anwendung möglichst optimal sind.

Die Selektion von Sprachmodell-Trainingsdaten aus vorhandenem Trainingsmaterial für die Erzeugung eines Sprachmodells zeigt Fig. 2. Ein erster Textkorpus 10 (Hintergrundkorpus $C_{back}$) stellt das zur Verfügung stehende Trainingsmaterial dar. Er besteht üblicherweise aus einer Vielzahl von Dokumenten, beispielswise einer Vielzahl von Zeitungsartikeln. Unter Verwendung eines anwendungsspezifischen zweiten Textkorpus 11 ($C_{target}$), der Textbeispiele aus dem Anwendungsgebiet des Spracherkennungssystems 1 enthält, werden nun sukzessive Teile (Dokumente) aus dem ersten Textkorpus 10 entfernt, um einen reduzierten ersten Textkorpus 12 ($C_{spez}$) zu generieren; auf der Basis des Textkorpus 12 wird das Sprachmodell 7 (LM, "Language Model") des Spracherkennungssystems 1 erzeugt, das besser auf das Anwendungsgebiet, aus dem der zweite Textkorpus 11 stammt, angepasst ist als ein Sprachmodell, dass auf der Basis des Hintergrundkorpus 10 erzeugt wurde. Übliche Prozeduren zur Erzeugung des Sprachmodells 7 aus dem reduzierten Textkorpus 11 sind durch den Block 14 zusammengefasst. Es werden Auftrittshäufigkeiten der entsprechenden N-Gramme ausgewertet und in Wahrscheinlichkeitswerte umgesetzt. Dies Prozeduren sind bekannt und werden deshalb nicht mehr näher erläutert. Ein Testkorpus 15 wird zur Bestimmung des Endes der Iteration zur Reduktion des erstes Trainingskorpus 10 verwendet.

Die Reduzierung des Textkorpus 10 wird auf folgende Art und Weise durchgeführt:

Ausgehend davon, dass der Textkorpus 10 aus Textkorpusteile darstellenden Dokumenten $A_i$ (i = 1, ..., J) zusammengesetzt ist, wird im ersten Iterationsschritt das Dokument $A_i$ gesucht, das das M-Gramm-Selektionskriterium

$$\Delta F_{i,M} = \sum_{x_M} N_{spez}(x_M) \log \frac{p(x_M)}{p_{A_i}(x_M)}$$

maximiert. $N_{spez}(x_M)$ ist die Häufigkeit des M-Gramms $x_M$ im anwendungsspezifischen Textkorpus 11, $p(x_M)$ ist die aus der Häufigkeit des M-Gramms $x_M$ im Textkorpus 10 ermittelte M-Gramm-Wahrscheinlichkeit und $p_{Ai}(x_M)$ ist die aus der Häufigkeit des M-Gramms $x_M$ im um den Textkorpusteil $A_i$ reduzierten Textkorpus 10 ermittelte M-Gramm-Wahrscheinlichkeit.

Der Zusammenhang zwischen einer ermittelten M-Gramm-Häufigkeit $N(x_M)$ und einem zugehörigen Wahrscheinlichkeitswert $p(x_M)$ ergibt sich beispielsweise für sogenannte "backing-off"-Sprachmodelle aus der Formel

$$p(w|h)) = \frac{N(w|h)-d}{N(h)} \text{-} \beta(w|h),$$

wobei ein M-Gramm $x_M$ sich aus einem Wort w und einer zugehörigen Vergangenheit h zusammensetzt. d ist eine Konstante, $\beta(w|h)$ ist ein vom jeweiligen M-Gramm abhängiger Korrekturwert.

Nachdem ein Dokument $A_i$ auf diese Weise ermittelt wurde, wird der Textkorpus 10 um dieses Dokument reduziert. Ausgehend von dem so erzeugten reduzierten Textkorpus 10 werden nun in nachfolgenden Iterationsschritten in entsprechender Weise Dokumente $A_i$ mit Hilfe des genannten Selektionskriteriums $\triangle F_{i,M}$ aus dem bereits reduzierten Textkorpus 10 selektiert und der Textkorpus 10 sukzessive um weitere Dokumente $A_i$ reduziert. Die Reduktion des Textkorpus 10 wird solange fortgesetzt, bis ein vorgebbares Kriterium für den reduzierten Textkorpus 10 erfüllt ist. Ein solches Kriterium ist beispielsweise die Perplexität oder die OOV-Rate ("Out-Of-Vocabulary-Rate") des aus dem reduzierten Textkorpus 10 resultierenden Sprachmodells, die vorzugsweise mit Hilfe des kleinen Testkorpus 15 bestimmt werden. Die Perplexität und auch die OOV-Rate erreichen bei der sukzessiven Reduktion des Textkorpusses 10 ein Minimum und nehmen beim weiteren Fortführen der Reduktion wieder zu. Vorzugsweise wird die Reduktion dann beendet, wenn dieses Minimum erreicht ist. Der schließlich durch Reduktion des Textkorpusses 10 am Ende der Iteration erhaltene Textkorpus 12 wird als Basis zur Erzeugung des Sprachmodells 7 verwendet.

Einem Sprachmodell entspricht üblicherweise eine Baumstruktur, deren Baumkanten Wörter und deren Baumknoten Worthäufigkeiten zugeordnet sind. Im vorliegenden Fall wird eine solche Baumstruktur für den noch nicht reduzierten Textkorpus 10 generiert. Wird nun der Textkorpus 10 um bestimmte Anteile reduziert, werden bezüglich der betroffenen M-Gramme angepasste Häufigkeitswerte bestimmt; eine Anpassung der eigentlichen Baumstruktur, d.h. der Baumzweige und Baumverzweigungen, ist jedoch nicht erforderlich und erfolgt nicht. Nach jeder Auswertung des Selektionskriteriums $\triangle F_{i,M}$ werden die zughörigen angepassten Häufigkeitswerte wieder gelöscht.

Alternativ zum sukzessiven Reduzieren einen gegebenen Hintergrundkorpusses kann ein zur Sprachmodellbildung verwendeter Textkorpus auch dadurch gebildet werden, dass ausgehend von einem einzelnen Anteil (= Textdokument) des Hintergrundkorpusses sukzessive dieses Dokument um jeweils ein anderes Dokument des Hintergrundkorpusses zu einem akkumulierten Textkorpus in Abhängigkeit von einem anwendungsspezifischen Textkorpus erweitert wird. Die zur Textkorpuserweiterung dienenden Anteile des Hintergrundkorpusses werden in den einzelnen Iterationsschritten mit Hilfe des folgenden Selektionskriteriums ermittelt.

$$\Delta F_{i,M} = \sum_{x_M} N_{spez}(x_M) \log \frac{p_{A_{akk}}(x_M)}{p_{A_{akk}+A_i}(x_M)} .$$

$p_{A_{akk}}(x_M)$ ist der der Häufigkeit des M-Gramms $x_M$ in einem akkumulierten Textkorpus $A_{akk}$ entsprechende Wahrscheinlichkeit, wobei der akkumulierte Textkorpus $A_{akk}$ die Kombination von in vorausgehenden Iterationsschritten selektierten Dokumenten des Hintergrundkorpusses ist. Im aktuellen Iterationsschritt wird dasjenige noch nicht im akkumierten Textkorpus enthaltene Dokument $A_i$ des Hintergrundkorpusses selektiert, für das $\triangle F_{i,M}$ maximal ist; dieses wird mit dem verwendeten akkumulierten Textkorpus $A_{akk}$ zu einem erweiterten Textkorpus kombiniert, der im nächsten Iterationsschritt als akkumulierter Textkorpus zugrundegelegt wird. Der Index $A_{akk}$+$A_i$ verweist auf die Kombination eines Dokuments $A_i$ mit dem akkumulierten Textkorpus $A_{akk}$ des aktuellen Iterationsschritts. Die Iteration wird abgebrochen, wenn ein vorgebbares Abbruchkriterium (siehe oben) erfüllt wird, z. B. wenn die im aktuellen Iterationsschritt gebildete Kombination $A_{akk}$+$A_i$ zu einem Sprachmodell mit minimaler Perplexität führt.

Bei der Erzeugung des akustischen Modells 6 werden entsprechende Ansätze verfolgt, d.h. aus einer gegebenen Menge an in Form von Merkmalsvektoren vorliegenden sprachlichen Äußerungen (akustisches Trainingsmaterial) werden in einer Ausführungsvariante diejenigen sukzessive selektiert, die zu einem optimierten anwendungsspezifischen akustischen Modell mit den zugehörigen entsprechenden akustischen Referenzen führen. Jedoch ist auch der umgekehrte Weg möglich, nämlich dass Teile des gegebenen akustischen Trainingsmaterials sukzessive zur Bildung des schließlich zur Bildung der für das Spracherkennungssystem verwendeten akustischen Referenzen aufakkumiert werden.

Die Selektion von akustischem Trainingsmaterial wird wie folgt vorgenommen:

$x_i$ bezeichne die Gesamtheit der im akustischen Trainingsmaterial enthaltenen Merkmalsvektoren, die durch Merkmalsextraktion entsprechend der von Block 3 aus Fig. 1 durchgeführten Prozeduren gebildet werden und zu Klassen (entsprechen beispielsweise Phonemen oder Phonemsegmenten oder Triphonen oder Triphonsegmenten) zusammengefasst sind. $C_j$ sei ein Satz Beobachtungen einer Klasse j im Trainingsmaterial. $C_j$ korrespondiert insbesondere zu einem bestimmten Zustand eines Hidden Markov Modells oder dazu entsprechend zu einem Phonem oder Phonemsegment. $W_k$ bezeichne den Satz aller Beobachtungen von Merkmalsvektoren in der jeweiligen Trainingssprachäußerung k, die aus einem einzelnen Wort oder einer Wortfolge bestehen kann. $N_k^j$ bezeichne die Anzahl Beobachtungen der Klasse j in einer Trainingssprachäußerung k. Weiterhin bezeichne $y_i$ die Beobachtungen von Merkmalsvektoren eines Satzes vorgegebener anwendungsspezifischer Sprachäußerungen. Die folgenden Formeln setzen Gaußverteilungen mit entsprechenden Mittelwerten und Kovarianzwerten voraus. Es wird für eine Klasse $C_j$ ein Mittelwertvektor

$$\mu_j = \frac{1}{N_j} \sum_{i \in C_j} x_i$$

definiert. Das Entfernen der Sprachäußerung k aus dem Trainingsmaterial bewirkt damit eine Mittelwertänderung bezüglich der Klasse $C_j$ zu

$$\mu_j^k = \frac{1}{N_j - N_k^j}\left[N_j \mu_j - \sum_{i \in \{C_j\}, i \in \{W_k\}} x_i\right]$$

Damit ergibt sich durch die Reduktion des akustischen Trainingsmaterials um die Sprachäußerung k nunmehr ein Änderungswert von

$$\Delta F_k^{'} = \sum_j \sum_{i \in T_j^k}\left[-\frac{1}{2}(y_i - \mu_j^k)^t \frac{1}{\Sigma}(y_i - \mu_j^k) + \frac{1}{2}(y_i - \mu_j)^t \frac{1}{\Sigma}(y_i - \mu_j)\right],$$

wenn unveränderte Kovarianzwerte angenommen werden. Der Wert $\Sigma$ wird wie folgt berechnet:

$$\Sigma = \frac{1}{N}\sum_i (x_i - \mu)^t (x_i - \mu)$$

mit N als Anzahl aller Merkmalsvektoren im nicht reduzierten akustischen Trainingsmaterial und $\mu$ als Mittelwert für alle diese Merkmalsvektoren.

Dieser Änderungswert kommt grundsätzlich schon als Kriterium für die Selektion von Sprachäußerungen, um die das akustische Trainingsmaterial reduziert wird, in Frage. Soll auch die Änderung von Kovarianzwerten mit in Betracht gezogen werden. Diese sind definiert durch

$$\Sigma_j = \frac{1}{N_j}\sum_{i \in C_j} (x_i - \mu_j)^t (x_i - \mu_j).$$

Nach Entfernen der Sprachäußerung k aus dem Trainingsmaterial ergibt sich eine Kovarianz von

$$\Sigma_j^k = \frac{1}{N_j - N_k^j}\left[N_j \Sigma_j - \sum_{i \in \{C_j\}, i \in \{W_k\}} (x_i - \mu_j)^t (x_i - \mu_j)\right],$$

so dass sich schließlich ein Änderungswert (logarithmischer Wahrscheinlichkeitswert) von

$$\Delta F_k = \sum_j \sum_{i \in T_j^k}\left[-\frac{1}{2}\log\det(\Sigma_j^k) - \frac{1}{2}(y_i - \mu_j^k)^t \frac{1}{\Sigma_j}(y_i - \mu_j^k) + \frac{1}{2}\log\det(\Sigma_j) + \frac{1}{2}(y_i - \mu_j)^t \frac{1}{\Sigma_j^k}(y_i - \mu_j)\right]$$

ergibt, der dann als Selektionskriterium verwendet wird. Sukzessive wird das akustische Trainingsmaterial um jeweils einen der selektierten Sprachäußerung k entsprechenden Anteil reduziert, was sich in einem entsprechend geänderten Mittelwert $\mu_j^k$ und einer entsprechend geänderten Kovarianz $\Sigma_j^k$ für die jeweilige Klasse j gemäß den oben angeführten Formeln niederschlägt. Die beim Ende der Iteration erhaltenen Mittelwerte und Kovarianzen bezüglich der verschiedenen noch im Trainingsmaterial verbliebenen Sprachäußerungen werden zur Bildung der akustischen Referenzen (Block 8) des Spracherkennungssystems 1 verwendet. Die Iteration wird abgebrochen, wenn ein vorgebbares Abbruchkriterium erfüllt ist. Beispielsweise wird in jedem Iterationsschritt für das sich ergebende akustische Modell und eine Test-Spracheingabe (Wortfolge) die sich ergebende Wortfehlerrate des Spracherkennungssystems ermittelt. Ist die sich ergebende Wortfehlerrate ausreichend gering oder wird ein Minimum der Wortfehlerrate erreicht, wird die Iteration abgebrochen.

Ein anderer Ansatz zur Bildung des akustischen Modells eines Spracherkennungssystems geht davon aus, dass ein eine Sprachäußerung repräsentiertender Anteil eines gegebenen akustischen Trainingsmaterials, das eine Vielzahl von Sprachäußerungen repräsentiert, sukzessive um ein oder mehrere andere Anteile des gegebenen akustischen Trainingsmaterials erweitert wird und das mittels der aufakkumulierten Anteile des gegebenen akustischen Trainingsmaterials die akustischen Referenzen des akustischen Modells gebildet werden. Bei diesem Ansatz wird in jedem Iterationsschritt eine Sprachäußerung k ermittelt, die ein Selektionskriterium $\Delta F'_k$ oder $\Delta F_k$ gemäß den oben angeführten Formeln maximiert. Anstatt gegebenes akustisches Trainingsmaterial sukzessive zu reduzieren, werden jeweils einer einzelnen Sprachäußerung entsprechende Teile des gegebenen akustischen Trainingsmaterials aufakkumuliert, und zwar in jedem Iterationsschritt jeweils um den einer einzelnen Sprachäußerung k entsprechenden Anteil des gegebenen akustischen Trainingsmaterials. Die Formeln für $\mu_j^k$ und $\Sigma_j^k$ müssen dabei wie folgt modifiziert werden:

$$\mu_j^k = \frac{1}{N_j + N_k^j}\left[N_j \mu_j + \sum_{i\in\{C_j\}, i\in\{W_k\}} x_i\right];$$

$$\Sigma_j^k = \frac{1}{N_j + N_k^j}\left[N_j \Sigma_j + \sum_{i\in\{C_j\}, i\in\{W_k\}} (x_i - \mu_j)^T (x_i - \mu_j)\right].$$

Die übrigen Formeln können unverändert verwendet werden.

Die beschriebenen Ansätze zur Bildung des akustischen Modells eines Spracherkennungssystems sind grundsätzlich für alle Verklebungsarten für Mittelwerte und Kovarianzen und alle Arten der Modellierung von Kovarianzen (z. B. Skalar, Diagonalmatrix, Vollmatrix) geeignet. Die Ansätze sind auch nicht auf Gaußverteilungen beschränkt, sondern lassen sich auch beispielsweise auf Laplaceverteilungen umschreiben.

**Patentansprüche**

1. Verfahren zur Erzeugung eines Sprachmodells (7) für ein Spracherkennungssystem (1),
**dadurch gekennzeichnet,**

dass ein erster Textkorpus (10) sukzessive um ein oder mehrere Textkorpusteile in Abhängigkeit von Textdaten eines anwendungsspezifischen zweiten Textkorpus (11) reduziert wird und
dass unter Verwendung des reduzierten ersten Textkorpus (12) die Werte des Sprachmodells (7) erzeugt werden.

2. Verfahren nach Anspruch 1,
**dadurch gekennzeichnet,**
**dass** zur Bestimmung der Textkorpusteile, um die der erste Textkorpus (10) reduziert wird, Unigrammhäufigkeiten im ersten Textkorpus (10), im reduzierten ersten Textkorpus (12) und im zweiten Textkorpus (12) ausgewertet werden.

3. Verfahren nach Anspruch 2,
**dadurch gekennzeichnet,**
**dass** zur Bestimmung der Textkorpusteile, um die der erste Textkorpus (10) in einem ersten Iterationsschritt und in entsprechender Weise in weiteren Iterationsschritten reduziert wird, das folgende Selektionskriterium verwendet

wird:

$$\Delta F_{i,M} = \sum_{x_M} N_{spez}(x_M) \log \frac{p(x_M)}{p_{A_i}(x_M)}$$

mit $N_{spez}(x_M)$ als Häufigkeit des M-Gramms $x_M$ im zweiten Textkorpus, $p(x_M)$ als aus der Häufigkeit des M-Gramms $x_M$ im ersten Trainingskorpus ermittelte M-Gramm-Wahrscheinlichkeit und $p_{Ai}(x_M)$ als aus der Häufigkeit des M-Gramms $x_M$ im um den Textkorpusteil $A_i$ reduzierten ersten Trainingskorpus ermittelte M-Grammwahrscheinlichkeit.

**4.** Verfahren nach Anspruch 3,
**dadurch gekennzeichnet,**
**dass** Trigramme mit M = 3 oder Bigramme mit M = 2 oder Unigramme mit M = 1 zugrunde gelegt werden.

**5.** Verfahren nach einem der Ansprüche 1 bis 4,
**dadurch gekennzeichnet,**
**dass** zur Ermittlung des Endes der Reduktion des ersten Trainingskorpusses (10) ein Testtext (15) ausgewertet wird.

**6.** Verfahren nach Anspruch 5,
**dadurch gekennzeichnet,**
**dass** die Reduktion des ersten Trainingskorpusses (10) beim Erreichen eines bestimmten Perplexitätswertes oder einer bestimmten OOV-Rate des Testtextes, insbesondere beim Erreichen eines Minimums, beendet wird.

**7.** Verfahren zur Erzeugung eines Sprachmodells (7) für ein Spracherkennungssystem (1),
**dadurch gekennzeichnet,**
**dass** ein Textkorpusteil eines gegebenen ersten Textkorpusses in Abhängigkeit von Textdaten eines anwendungsspezifischen Textkorpusses sukzessive um ein oder mehrere andere Textkorpusteile des ersten Textkorpusses zur Bildung eines zweiten Textkorpusses erweitert wird und dass die Werte des Sprachmodells (7) unter Verwendung des zweiten Textkorpusses erzeugt werden.

**8.** Verfahren zum Erzeugen eines akustischen Modells (6) für ein Spracherkennungssystem (1),
**dadurch gekennzeichnet,**

dass eine erste Anzahl von Sprachäußerungen repräsentierendes akustisches Trainingsmaterial sukzessive um einzelne Sprachäußerungen repräsentierende Trainingsmaterialanteile in Abhängigkeit von einer zweiten Anzahl anwendungsspezifischer Sprachäußerungen reduziert wird und
dass mittels des reduzierten akustischen Trainingsmaterials die akustischen Referenzen (8) des akustischen Modells (6) gebildet werden.

**9.** Verfahren zum Erzeugen eines akustischen Modells (6) für ein Spracherkennungssystem (1),
**dadurch gekennzeichnet,**
**dass** ein eine Sprachäußerung repräsentiertender Anteil eines gegebenen akustischen Trainingsmaterials, das eine Vielzahl von Sprachäußerungen repräsentiert, sukzessive um ein oder mehrere andere Anteile des gegebenen akustischen Trainingsmaterials erweitert wird und das mittels der aufakkumulierten Anteile des gegebenen akustischen Trainingsmaterials die akustischen Referenzen (8) des akustischen Modells (6) gebildet werden.

**10.** Spracherkennungssystem mit einem nach einem der Ansprüche 1 bis 7 erzeugten Sprachmodell und/oder einem nach Anspruch 8 oder 9 erzeugten akustischen Modell.

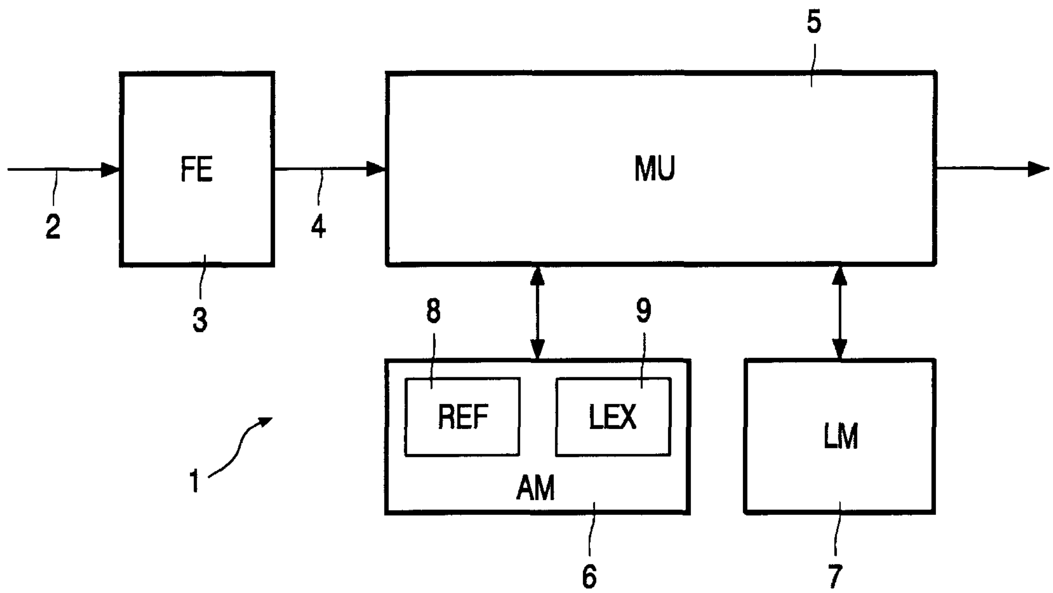
FE
MU
REF
LEX
AM
LM
1
2
3
4
5
6
7
8
9

FIG. 1

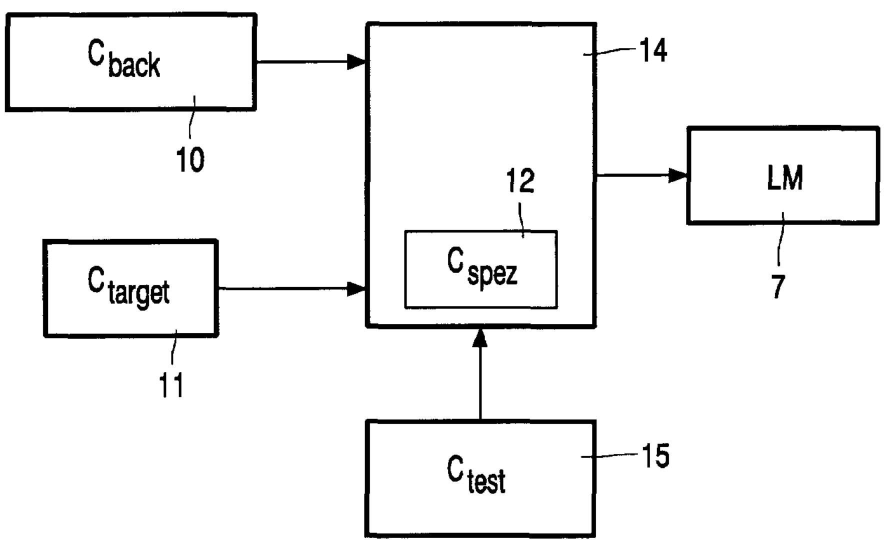
C back
C target
C spez
C test
LM
10
11
12
14
15
7

FIG. 2